# EUROPÄISCHE PATENTSCHRIFT

(11) **EP 3 772 521 B1**
(45) Veröffentlichungstag und Bekanntmachung des Hinweises auf die Patenterteilung: **07.06.2023**
(21) Anmeldenummer: 19191021.5
(22) Anmeldetag: 09.08.2019
(51) Int. Cl.: C08G 69/26, C08K 3/014, C08K 3/04, C08K 3/34, C08K 7/14

(54) **TEILKRISTALLINE COPOLYAMIDE, DIESE ENTHALTENDE FORMMASSEN UND DEREN VERWENDUNG SOWIE DARAUS HERGESTELLTE FORMKÖRPER**
PARTIALLY CRYSTALLINE COPOLYAMIDES, MOULDING COMPOUNDS CONTAINING THE SAME AND USE THEREOF AND MOULDED BODIES PRODUCED THEREFROM
COPOLYAMIDES PARTIELLEMENT CRISTALLINS, MATIÈRES DE MOULAGE CONTENANT LESDITS COPOLYAMIDES ET LEUR UTILISATION AINSI QUE CORPS MOULÉS FABRIQUÉS À PARTIR DES DITES MATIÈRES DE MOULAGE

(43) Veröffentlichungstag der Anmeldung: 10.02.2021
(73) Patentinhaber: EMS-CHEMIE AG, 7013 Domat/Ems (CH)
(72) Erfinder: HARDER, Philipp, 7000 Chur (CH); SCHUBERT, Christian, 7013 Domat/Ems (CH); EBLING, Ronny, 7013 Domat/Ems (CH)
(74) Vertreter: Pfenning, Meinig & Partner mbB

(56) Entgegenhaltungen:
- EP-A1- 3 309 199
- EP-A1- 3 392 290
- GB-A- 1 433 144

## Beschreibung

Die vorliegende Erfindung betrifft teilkristalline Copolyamide und daraus hergestellte Formmassen, die neben dem teilkristallinen Copolyamid mindestens einen Füllstoff und ggf. Zusatzstoffe enthalten. Ebenso betrifft die Erfindung hieraus hergestellte Formkörper.

Aus dem Stand der Technik ist eine Vielzahl von Polyamidformmassen bekannt, wobei die Zusammensetzung der Formmassen an ihr gewünschtes Eigenschaftsprofil angepasst ist. Insbesondere bei verstärkten Polyamidformmassen soll neben vorteilhaften mechanischen Eigenschaften auch eine glänzende und glatte Oberfläche bei daraus hergestellten Formkörpern ermöglicht werden. Hierbei sollen die verarbeitungstechnischen Eigenschaften der Formmassen nicht beeinträchtigt werden. Allerdings ist bei glasfaserverstärkten Spritzguss-Produkten die Oberfläche der Formteile häufig durch Unebenheiten, Unregelmäßigkeiten bzw. durch den Glasfasereffekt matt und rau. Bei Sichtformteilen, die oft für das Design eines Körpers relevant sind, ist dieser Effekt jedoch im Allgemeinen unerwünscht.

Die Oberflächenqualität eines Spritzgussteils wird unter anderem durch das Kristallisationsverhalten des Copolyamids beeinflusst. Hohe Temperaturen des Spritzgusswerkzeugs können dabei zwar die Oberflächenqualität verbessern, verlängern jedoch auch die Kühlzeit bis zum Erreichen der Entformungstemperatur.

Aus GB 922,677 sind Polyamide bzw. Polyesteramide bekannt, die aus mindestens 50 Mol.-% von 1,3- oder 1,4-Bis(aminomethyl)-cyclohexan gebildet sind. Diese werden zur Herstellung von Fasern, Folien oder Formkörpern verwendet.

Aus GB 1433 144 sind transparente Polyamide bekannt, aus den Formkörper bei relativ hohen Temperaturen herstellbar sind, ohne die guten mechanischen Eigenschaften zu verlieren. Es handelt sich hierbei um amorphe Polyamide, die aus einem Gemisch aus 1,3-Bis(aminomethyl)-cyclohexan sowie einem aliphatischen Diamin sowie einer Mischung aus einer aromatischen und einer aliphatischen Dicarbonsäure gebildet sind. Die Oberflächeneigenschaften der aus diesen Formmassen hergestellten Formkörper wird in dieser Druckschrift nicht angesprochen.

Aus GB 1 351 898 sind Fasern aus einem Blend aus einem Homopolyamid (PA 6 oder PA 66) und einem Copolyamid, das zu über 80 Gew.-% aus den Monomeren des Homopolyamids und zu weniger als 20 Gew.-% aus 1,3-Bis(aminomethyl)-cyclohexan und 1,6-Hexandiamin gebildet ist. Als Carbonsäuren werden sowohl aliphatische als auch aromatische Dicarbonsäuren eingesetzt. Diese Fasern eignen sich besonders für die Herstellung textiler Materialien.

Aus EP 3 309 199 A1 sind Glasfüller verstärkte, optional teilkristalline PolyamidFormmassen welche sowohl gute mechanische als auch optische Eigenschaften aufweisen bekannt. Diese werden aus Gemischen von 1,6-Hexandiamin, 4,4'-Methylen-bis(2-methylcyclohexanamin), 4,4'-Methylen-bis(cyclohexylamin), Isophthalsäure, Terephthalsäure und Laurinlactam hergestellt.

Aus EP 3 392 290 A1 sind Polyamide aus Gemischen von 1,6-Hexandiamin, 1,3-/1,4-Bis(aminomethyl)-cyclohexan, Terephthalsäure und Adipinsäure bekannt.

Ausgehend hiervon war es Aufgabe der vorliegenden Erfindung Copolyamide für die Herstellung von Formmassen bereitzustellen, die die Herstellung von Formkörpern erlauben, die neben einer hohen Steifigkeit sehr gute optische Eigenschaften aufweisen.

Diese Aufgabe wird durch die teilkristallinen Copolyamide mit den Merkmalen des Anspruchs 1, die Polyamid-Formmassen mit den Merkmalen des Anspruchs 7 und die Formkörper mit den Merkmalen des Anspruchs 10 gelöst. In Anspruch 12 werden erfindungsmäße Verwendungen angegeben. Erfindungsgemäß werden teilkristalline Copolyamide bereitgestellt, die aus den folgenden Monomeren (a1) bis (a5) gebildet sind:
(a1) 23 bis 37,5 Mol-% 1,6-Hexandiamin;
(a2) 12,5 bis 22 Mol-% 1,3-Bis(aminomethyl)-cyclohexan;
(a3) 0 bis 5 Mol-% mindestens ein Diamin mit 2 bis 35 Kohlenstoffatomen, verschieden von den Monomeren (a1) und (a2);
(a4) 45 bis 50 Mol-% 1,6-Hexandisäure;
(a5) 0 bis 5 Mol-% mindestens eine Dicarbonsäure mit 2 bis 44 Kohlenstoffatomen, verschieden von dem Monomer (a4);

Dabei sind die Anteile der Monomere (a1), (a2) und (a3) auf die Summe der eingesetzten Diamine bezogen und ergänzen sich auf 50 Mol-%. Die Anteile der Monomere (a4) und (a5) sind auf die Summe der eingesetzten Dicarbonsäuren bezogen und ergänzen sich auf 50 Mol-%. Die Monomere (a1) bis (a5) ergänzen sich auf 100 Mol-%.

### Begriffsdefinitionen

### • Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 16396-1 (2015, (D)) festgelegten. Die darin verwendeten Abkürzungen werden im Folgenden synonym zu den IUPAC Namen der Monomere verwendet. Insbesondere kommen folgende Abkürzungen für Monomere in der vorliegenden Anmeldung vor 1,3-BAC für 1,3-Bis(aminomethyl)-cyclohexan (auch als 1,3-Cyclohexandimethanamin bezeichnet, CAS-Nr. 2579-20-6), 1,4-BAC für 1,4-Bis(aminomethyl)-cyclohexan (auch als 1,4-Cyclohexandimethanamin bezeichnet, CAS-Nr. 2549-93-1), IPD für Isophorondiamin (auch als 3-(Aminomethyl)-3,5,5-trimethylcyclohexanamin, 1-Amino-3-aminomethyl-3,5,5-trimethylcyclohexan oder Cyclohexanmethanamin,5-amino-1,3,5,5-trimethyl- bezeichnet, CAS-Nr. 2855-13-2), MACM für Bis(4-amino-3-methyl-cyclohexyl)methan (auch als 3,3'-Dimethyl-4,4'-diaminodicyclohexylmethan bezeichnet, CAS-Nr. 6864-37-5), PACM für Bis(4-amino-cyclohexyl)methan (auch als 4,4'-Diaminodicyclohexylmethan bezeichnet, CAS-Nr. 1761-71-3), 6 für 1,6-Hexandiamin (CAS-Nr. 124-09-4), T für Terephthalsäure (CAS-Nr. 100-21-0), I für Isophthalsäure (CAS-Nr. 121-95-5), 6 für 1,6-Hexandisäure (CAS-Nr. 124-04-9).

### • Teilkristalline Copolyamide

Im Sinne der vorliegenden Erfindung sind teilkristalline Copolyamide solche Copolyamide, die einen Schmelzpunkt besitzen, und/oder solche Copolyamide, die in der dynamischen Differenz-Kalorimetrie (engl. Differential Scanning Calorimetry, DSC) nach ISO 11357-3 (2013) bei einer Aufheizrate von 20 K/min bevorzugt eine Schmelzwärme von mehr als 4 J/g aufweisen.

### • Allgemeines zu den Zusammensetzungen

Die Begriffe "enthaltend" und "umfassend" in den vorliegenden Ansprüchen und in der Beschreibung bedeuten, dass weitere Komponenten nicht ausgeschlossen sind. Im Rahmen vorliegender Erfindung ist der Begriff "bestehend aus" als bevorzugte Ausführungsform der Begriffe "enthaltend" oder "umfassend" zu verstehen. Wenn definiert wird, dass ein Gruppe mindestens eine bestimmte Anzahl von Komponenten "enthält" oder diese "umfasst", ist dies auch so zu verstehen, dass eine Gruppe offenbart wird, die vorzugsweise aus diesen Komponenten "besteht".

### • Allgemeines zu den Mengenangaben

Die Mengenangaben der im Copolyamid enthaltenen Diamine und Dicarbonsäuren addieren sich jeweils zu 50 Mol-%. Alle im Copolyamid enthaltenen Monomere ergänzen sich in Summe auf 100 Mol-%. Die festgelegten Bereiche der Mengenangaben für die einzelnen Monomere sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller im Copolyamid enthaltenen Monomeren 100 Mol-% ergibt.

Bei den Mengenangaben zu den Dicarbonsäuren und Diaminen der teilkristallinen Copolyamide gilt, dass die Summe der molaren Mengen aller Diamine im Wesentlichen gleich der Summe der molaren Mengen aller Dicarbonsäuren ist. Im Wesentlichen gleich bedeutet dabei einen maximalen Überschuss der Dicarbonsäuren oder der Diamine von 3 %, d.h. das molare Verhältnis von Dicarbonsäuren zu Diaminen beträgt 1,03 : 1 bis 1 : 1,03. Bevorzugt ist ein maximaler Überschuss der Dicarbonsäuren oder der Diamine von 2 %, d.h. das molare Verhältnis von Dicarbonsäuren zu Diaminen beträgt 1,02 : 1 bis 1 : 1,02. Der Überschuss dient zum Ausgleich von Verlusten an Monomer und/oder zur Regelung der relativen Viskosität des Polyamides und somit der Molmasse.

Die Mengenangaben bezüglich der Monomere sind dabei so zu verstehen, dass sich ein entsprechendes Molverhältnis dieser bei der Polykondensation eingesetzten Monomere auch in den derart durch Polykondensation hergestellten Copolyamiden wiederfindet.

Die Polyamid-Formmassen gemäß der vorliegenden Erfindung enthalten oder bestehen aus den Komponenten (I) und (II) sowie gegebenenfalls (III), es gilt dabei die Maßgabe, dass sich die Komponenten (I), (II) und (III) in Summe auf 100 Gew.-% ergänzen. Die festgelegten Bereiche der Mengenangaben für die einzelnen Komponenten (I), (II) und (III) sind so zu verstehen, dass innerhalb der vorgegebenen Bereiche eine willkürliche Menge für jede der Einzelkomponenten ausgewählt werden kann, sofern die Maßgabe erfüllt wird, dass die Summe aller Komponenten (I) bis (III) 100 Gew.-% ergibt.

### Teilkristalline Copolyamide

Der Anteil an Monomer (a1) im teilkristallinen Copolyamid liegt bevorzugt im Bereich von 23 bis 36 Mol-%, besonders bevorzugt im Bereich von 25 bis 34 Mol-% und ganz besonders bevorzugt im Bereich von 27,5 bis 32,5 Mol-%. Der Anteil an Monomer (a2) im teilkristallinen Copolyamid liegt bevorzugt im Bereich von 14 bis 22 Mol-%, besonders bevorzugt im Bereich von 16 bis 20 Mol-% und ganz besonders bevorzugt im Bereich von 17,5 bis 20 Mol-%. Der Anteil an Monomer (a3) im teilkristallinen Copolyamid liegt bevorzugt im Bereich von 0 bis 2,5 Mol-%. Dabei beziehen sich die Anteile der Monomere (a1), (a2) und (a3) auf die Summe der eingesetzten Diamine und ergänzen sich auf 50 Mol-%.

Der Anteil an Monomer (a4) im teilkristallinen Copolyamid liegt bevorzugt im Bereich von 47,5 bis 50 Mol-%. Der Anteil an Monomer (a5) im Copolyamid liegt bevorzugt im Bereich von 0 bis 2,5 Mol-%. Dabei beziehen sich die Anteile der Monomere (a4) und (a5) auf die Summe der eingesetzten Diamine und ergänzen sich auf 50 Mol-%.

Das mindestens eine Monomer (a3) ist vorzugsweise ausgewählt aus der Gruppe bestehend aus Ethylendiamin, Butandiamin, Pentandiamin, Methylpentandiamin, 1,8-Octandiamin, Methyloctandiamin, 1,9-Nonandiamin, 1,10-Decandiamin, 1,11-Undecandiamin, 1,12-Dodecandiamin, Trimethylhexamethylendiamin, 1,4-Cyclohexandiamin, 1,3-Cyclohexandiamin, Bis-(4-amino-3-methyl-cyclohexyl)-methan, Bis-(4-amino-cyclohexyl)-methan, Isophorondiamin, 1,4-Bis(aminomethyl)-cyclohexan, m-Xylylendiamin, p-Xylylendiamin, Bis(aminocyclohexyl)propan und seinen Alkylderivaten, Norbornandiamin und Bis(aminomethyl)norbornan.

Eine weitere bevorzugte Gruppe aus der das mindestens eine Monomer (a3) ausgewählt ist, besteht aus Pentandiamin, Methylpentandiamin, Methyloctandiamin, 1,9-Nonandiamin, 1,10-Decandiamin, 1,12-Dodecandiamin, Trimethylhexamethylendiamin, Bis-(4-amino-3-methylcyclohexyl)-methan, Bis-(4-amino-cyclohexyl)-methan, Isophorondiamin, 1,4-Bis(aminomethyl)-cyclohexan, m-Xylylendiamin und p-Xylylendiamin.

Besonders bevorzugt, ist das mindestens eine Monomer (a3) ausgewählt aus der Gruppe bestehend aus Pentandiamin, Methylpentandiamin, Methyloctandiamin, 1,9-Nonandiamin, 1,10-Decandiamin, 1,12-Dodecandiamin, Trimethylhexamethylendiamin, Bis-(4-amino-3-methylcyclohexyl)-methan, Bis-(4-amino-cyclohexyl)-methan und Isophorondiamin.

Ganz besonders bevorzugt wird als Monomer (a3) Bis-(4-amino-3-methyl-cyclohexyl)-methan, Bis-(4-amino-cyclohexyl)-methan und/oder Isophorondiamin eingesetzt.

Das mindestens eine Monomer (a5) ist vorzugsweise ausgewählt aus der Gruppe bestehend aus Isophthalsäure, Terephthalsäure, Naphthalindicarbonsäure, 1,9-Nonandisäure, 1,10-Decandisäure, 1,11-Undecandisäure, 1,12-Dodecandisäure, 1,13-Tridecandisäure, 1,14-Tetradecandisäure, 1,15-Pentadecansäure, 1,16-Hexadecandisäure, 1,17-Heptadecandisäure, 1,18-Octadecandisäure, Arachinsäure, Japansäure, Behensäure, Cycloheaxandisäure, Phenylindandicarbonsäure, Phenylendioxydiessigsäure und Dimerfettsäure mit 36 oder 44 Kohlenstoffatomen.

Eine weitere bevorzugte Gruppe aus der das mindestens eine Monomer (a5) ausgewählt ist, besteht aus Isophthalsäure, Terephthalsäure, 1,10-Decandisäure, 1,12-Dodecandisäure, 1,14-Tetradecandisäure, 1,16-Hexadecandisäure.

Besonders bevorzugt ist das mindestens eine Monomer (a5) ausgewählt aus der Gruppe bestehend aus Isophthalsäure, Terephthalsäure, 1,10-Decandisäure und 1,12-Dodecandisäure.

Ganz besonders bevorzugt wird als Monomer (a5) Isophthalsäure und/oder Terephthalsäure eingesetzt.

Bevorzugt enthält das teilkristalline Copolyamid (Komponenten (A)) weder Lactame noch Aminosäuren.

Es ist bevorzugt, dass die teilkristallinen Copolyamide eine relative Viskosität, gemessen mit 0,5 g in 100 ml m-Kresol bei 20 °C von 1,45 bis 2,10, besonders bevorzugt 1,50 bis 2,05, ganz besonders bevorzugt 1,55 bis 1,98 aufweisen.

Vorzugsweise weisen die teilkristallinen Copolyamide eine Glasübergangstemperatur im Bereich von 50 bis 200 °C, bevorzugt von 60 bis 190 °C, besonders bevorzugt im Bereich von 65 bis 90 °C auf.

Die teilkristallinen Copolyamide weisen vorzugsweise eine Schmelztemperatur im Bereich von 180 bis 260 °C, bevorzugt von 205 bis 245 °C, besonders bevorzugt im Bereich von 210 bis 235 °C auf.

Es ist bevorzugt, dass die teilkristallinen Copolyamide eine Kristallisationstemperatur im Bereich von 130 bis 200 °C aufweisen, besonders bevorzugt im Bereich von 140 bis 200 °C.

Eine weitere bevorzugte Ausführungsform sieht vor, dass die teilkristallinen-Copolyamide eine Kristallisationsgeschwindigkeit im Bereich von 12 bis 50 J/g min aufweisen, besonders bevorzugt im Bereich von 15 bis 47 J/g min, ganz besonders bevorzugt im Bereich von 23 bis 45 J/g min.

Die erfindungsgemäßen Copolyamide können bevorzugt eine oder mehrere, besonders bevorzugt alle der zuvor genannten Eigenschaften (relative Viskosität, Glasübergangstemperatur, Schmelztemperatur, Kristallisationstemperatur, Kristallisationsgeschwindigkeit) aufweisen.

### Polyamid-Formmasse

Die erfindungsgemäße Polyamid-Formmasse enthält ein teilkristallines Copolyamid wie es zuvor definiert wurde.

Die erfindungsgemäße Polyamid-Formmasse enthält oder besteht vorzugsweise aus
I) 22 bis 70 Gew.-% mindestens eines Copolyamids wie es zuvor definiert wurde
II) 30 bis 70 Gew.-% mindestens eines Füllstoffs und
III) 0 bis 8 Gew.-% mindestens eines Zusatzstoffs.

Dabei ist die Komponente (III) verschieden von Komponente (II) und die Mengenanteile der Komponenten (I) bis (III) ergänzen sich auf 100 Gew.-%.

Der Anteil von Komponente (I) in der Polyamid-Formmasse liegt bevorzugt im Bereich von 29 bis 64,9 Gew.-%, besonders bevorzugt im Bereich von 36 bis 59,8 Gew.-%, bezogen auf das Gesamtgewicht der Polyamid-Formmasse.

Der Anteil von Komponente (II) in der Polyamid-Formmasse liegt bevorzugt im Bereich von 35 bis 65 Gew.-%, besonders bevorzugt im Bereich von 40 bis 60 Gew.-%, bezogen auf das Gesamtgewicht der Polyamid-Formmasse.

Der Anteil von Komponente (III) in der Formmasse liegt bevorzugt im Bereich von 0,1 bis 6 Gew.-%, besonders bevorzugt von 0,2 bis 4 Gew.-%, bezogen auf das Gesamtgewicht der Polyamid-Formmasse.

Das Verhalten von Polyamid-Formmassen bei der thermoplastischen Verarbeitung zu Formteilen mittels Spritzguss oder Extrusion wird durch eine Reihe von thermischen Eigenschaften der Formmasse beinflusst.

Wesentlichen Einfluss auf die Wirtschaftlichkeit des Spritzgussprozesses hat die Zykluszeit. Limitierend ist die Abkühlzeit der Formmasse im Werkzeug bis die Teile stabil genug sind, dass sie sich ohne Deformation oder Auswerferabdrücke entformen lassen. Idealerweise sollte die Formmasse innerhalb der Abkühlzeit im Werkzeug auch vollständig auskristallisieren. Eine verzögerte Kristallisation nach der Entformung führt zu Schwindung und Verzug. Schnell kristallisierende Formmassen zeichnen sich durch eine hohe Kristallisationsgeschwindigkeit und damit eine kurze Zykluszeit aus.

Ein niedriger Schmelzpunkt spart Energie, da die Massetemperatur niedriger sein kann. Gleichzeitig wird dem thermischen Abbau und der damit verbundenen Verfärbung der Formmasse vorgebeugt.

Gleichzeitig dürfen Kristallisationstemperatur und -geschwindigkeit aber nicht so hoch sein, dass die Formmasse beim Kontakt mit der kalten Werkzeugoberfläche sofort erstarrt. Für eine präzise Abformung der Oberfläche ist eine wirksame Nachdruckphase ohne vorschnelles Erstarren der Formmasse nötig. Die erfindungsgemäßen Formmassen erreichen bei üblichen Wanddicken eine sehr gute Oberfläche mit guter Kristallinität innerhalb der durch die Wärmeleitfähigkeit der Polyamid-Formmasse vorgegebenen Mindestkühlzeit.

Zudem ist eine hohe Steifigkeit der Formkörper erwünscht, die sich durch einen hohen Zug-E-Modul ausgedrückt.

Für eine hochglänzende Oberfläche muss die Werkzeugtemperatur grundsätzlich höher als die Glasübergangstemperatur sein. Zu hohe Werkzeugtemperaturen verlängern die Kühlzeit jedoch unnötig und können zu Kleben und Abhebemarkierungen an der Teileoberfläche führen.

Zu beachten ist auch, dass bei Werkzeugtemperaturen von 190 bis 200 °C Wasser als Heizmedium durch ein Wärmeträgeröl ersetzt werden muss. Zusätzlich sind dann teure konstruktive Maßnahmen nötig. Sowohl lange Zykluszeiten als auch zusätzliche Kosten für die Werkzeugtemperierung sind nachteilig für die Formmasse, da sie die Kosten der daraus gefertigten Teile erhöhen.

Ein erfindungsgemäß hergestellter Formkörper weist vorzugsweise einen Zug-E-Modul bestimmt nach ISO 527 von mindestens 5000 MPa, bevorzugt mindestens 8000 MPa, besonders bevorzugt mindestens 12000 MPa auf.

Ein erfindungsgemäß hergestellter Formkörper weist an der Oberfläche bevorzugt einen Glanzwert bei 60° im trockenen Zustand, bestimmt nach DIN EN 2813 (2015), von 70 bis 100 GU auf.

Ein erfindungsgemäß hergestellter Formkörper weist an der Oberfläche bevorzugt einen Glanzwert bei 60° im konditionierten Zustand, bestimmt nach DIN EN 2813 (2015), von 60 bis 100 GU auf.

Die erfindungsgemäß hergestellten Formkörper können bevorzugt eine oder mehrere, besonders bevorzugt alle der zuvor genannten Eigenschaften (Zug-E-Modul und Glanzwerte) aufweisen.

### Komponente (II)

Der Begriff Füllstoffe (Komponente(II)) umfasst faser- oder nadelförmige Füllstoffe, teilchenförmige Füllstoffe und Mischungen davon.

Die Füllstoffe können vorzugsweise beschichtet oder oberflächenbehandelt sein, d.h. sie können mit einem geeigneten Schlichte- oder Haftvermittlersystem ausgerüstet oder anderweitig oberflächenaktiviert sein. Dazu können zum Beispiel Systeme auf Basis von Urethanen, Silanen, Epoxiden, Polyamiden, Polyhydroxyether, Acrylaten respektive Kombinationen oder Mischungen davon verwendet werden. Die Schlichte- oder Haftvermittlersysteme können auch noch andere Hilfsmittel wie zum Beispiel Antistatika oder Gleitmittel enthalten.

Die faser- oder nadelförmigen Füllstoffe sind vorzugsweise ausgewählt aus der Gruppe bestehend aus Glasfasern, Kohlenstofffasern, Basaltfasern, Schlackenfasern, Metallfasern, Whiskers, Mineralfasern, Wollastonit, gemahlenen Glasfasern, gemahlenen Kohlenstofffasern, gemahlenen Mineralfasern und Mischungen hiervon. Besonders bevorzugt werden die faser- oder nadelförmigen Füllstoffe aus der Gruppe bestehend aus Glasfasern, Kohlenstofffasern, Basaltfasern und Mischungen hiervon ausgewählt. Ganz besonders bevorzugt werden als faser- oder nadelförmige Füllstoffe ausschließlich Glasfasern eingesetzt.

Bei den Glas- oder Kohlenstoffasern können Schnittfasern oder Endlosfasern (Roving) verwendet werden.

Die Glas- oder Kohlenstofffasern weisen einen Querschnitt auf, der rund, oval, elliptisch, eckig oder rechteckig ist. Es können auch Fasern mit nichtkreisförmigen Querschnitt ("flache Fasern"), insbesondere ovale, elliptische, eckige oder rechteckige eingesetzt werden.

Das Erscheinungsbild der Glasfasern kann gestreckt oder spiralförmig sein.

Es können Glasfasern aus allen Glassorten, wie z.B. A-, C-, D-, E-, E-CR-, L-, LD-, M-, NE-, S-, R-AR-Glas, oder beliebigen Mischungen davon eingesetzt werden. Bevorzugt sind Glasfasern aus E-Glas oder Glasfasern aus Mischungen mit E-Glas oder Mischungen mit E-Glasfasern.

Die Schnittglasfasern besitzen vorzugsweise eine Faserlänge von 1 bis 25 mm, bevorzugt 1,5 bis 20 mm, besonders bevorzugt 2 bis 12 mm und ganz besonders bevorzugt von 2 bis 8 mm.

Die Glasfasern weisen vorzugsweise einen Durchmesser von 5 bis 20 µm, bevorzugt von 5 bis 15 µm und besonders bevorzugt von 6 bis 12 µm auf.

Werden die Glasfasern als Endlosfasern (Roving) beim Pulltrusionsverfahren eingesetzt, weisen sie vorzugsweise einen Durchmesser von maximal 20 µm, bevorzugt von maximal 18 µm, besonders bevorzugt von 10 bis 17 µm auf.

Die Kohlenstofffasern weisen vorzugsweise einen Durchmesser von 3 bis 12 µm, bevorzugt 4 bis 10 µm, besonders bevorzugt 4 bis 9 µm auf.

Bei flachen Fasern beträgt das Aspektverhältnis, d.h. das Verhältnis der Hauptquerschnittsachse zur Nebenquerschnittsachse 1,5 bis 8, bevorzugt 2 bis 6, besonders bevorzugt 3 bis 5.

Unter den flachen Fasern sind flache Glasfasern besonders bevorzugt.

Die Querschnittsachsen der flachen Glasfasern sind 3 bis 40 µm lang. Bevorzugt beträgt die Länge der Nebenquerschnittsachse 3 bis 20 µm, besonders bevorzugt 4 bis 10 µm und die Länge der Hauptquerschnittsachse 6 bis 40 µm, besonders bevorzugt 12 bis 30 µm.

Die teilchenförmigen Füllstoffe sind vorzugsweise ausgewählt aus der Gruppe bestehend aus Dolomit, Silikaten, Quarz, Talkum, Glimmer, Kaolin, Perlit, Kieselerde, gefällte oder pyrogene Kieselsäuren, Kieselgur, Titandioxid, Magnesiumcarbonat, Magnesiumhydroxid, Aluminiumhydroxyd, gemahlenem oder gefälltem Calciumcarbonat, Kreide, Kalk, Kalksteinmehl, Schiefermehl, Feldspat, Bariumcarbonat, Bariumsulfat, synthetischen Schichtsilikaten, natürlichen Schichtsilikaten, permanentmagnetischen oder magnetisierbaren Metallen oder Legierungen, Glasflakes, Glaskugeln, Hohlglaskugeln, hohlkugeligen Silikatfüllstoffen und Mischungen hiervon. Besonders bevorzugt werden die teilchenförmigen Füllstoffe aus der Gruppe bestehend aus Silikaten, Quarz, Talkum, Glimmer, Kaolin, Perlit, Kieselerde, gefällte oder pyrogene Kieselsäuren, Kieselgur, Titandioxid, Magnesiumcarbonat, Magnesiumhydroxid, Aluminiumhydroxyd, gemahlenem oder gefälltem Calciumcarbonat, Kreide, Kalk, Kalksteinmehl, Schiefermehl, Feldspat, Bariumcarbonat, Bariumsulfat, synthetischen Schichtsilikaten, natürlichen Schichtsilikaten, Glasflakes, Glaskugeln, Hohlglaskugeln, hohlkugeligen Silikatfüllstoffen und Mischungen hiervon ausgewählt. Ganz besonders bevorzugt werden die teilchenförmigen Füllstoffe aus der Gruppe bestehend aus Silikaten, Talkum, Glimmer, Kaolin, Titandioxid, gemahlenem oder gefälltem Calciumcarbonat, Kreide, Kalksteinmehl, Schiefermehl, synthetischen Schichtsilikaten, natürlichen Schichtsilikaten, Glasflakes, Glaskugeln, Hohlglaskugeln und Mischungen hiervon ausgewählt.

Bevorzugt wird in der erfindungsgemäßen Polyamid-Formmasse als Füllstoff (Komponente (II)) mindestens ein faser- oder nadelförmigen Füllstoff oder eine Mischung mindestens eines faser- oder nadelförmigen Füllstoffs mit mindestens einem teilchenförmigen Füllstoff eingesetzt.

Wird eine Mischung aus mindestens einem faser- oder nadelförmigen Füllstoff mit mindestens einem teilchenförmigen Füllstoff verwendet, macht der Anteil des teilchenförmigen Füllstoffs maximal die Hälfte, bevorzugt maximal ein Drittel, besonders bevorzugt maximal ein Viertel der gesamten Menge des Füllstoffs aus.

Besonders bevorzugt werden in der erfindungsgemäßen Polyamid-Formmasse als Füllstoff ausschließlich faser- oder nadelförmige Füllstoffe eingesetzt.

### Komponente (III)

Gemäß einer bevorzugten Ausführungsform der vorliegenden Erfindung ist der mindestens eine Zusatzstoff (Komponente (III)) ausgewählt aus der Gruppe bestehend aus anorganischen und organischen Stabilisatoren, insbesondere Antioxidantien, Antiozonantien, Lichtschutzmitteln, insbesondere UV-Stabilisatoren, UV-Absorbern oder UV-Blockern, Gleitmitteln, Farbstoffen, Markierungsmitteln, Pigmenten, Ruß, Graphit, Graphen, Polyamid-Oligomere, Kohlenstoffnanoröhrchen, photochromen Agenzien, Antistatika, Entformungsmitteln, Antiblockmitteln, kettenverlängernden Additiven, kettenverkürzenden Additiven, optischen Aufhellern, IR-Absorbern, NIR-Absorbern, halogenfreien Flammschutzmitteln, metallischen Pigmenten, Metallflittern, metallbeschichteten Partikeln und Mischungen davon.

Die Polyamid-Oligomere besitzen bevorzugt eine zahlenmittlere Molmasse von 1000 bis 6000 g/mol, besonders bevorzugt von 2500 bis 4500 g/mol, bestimmt mittels Gel-Permeations-Chromatographie (GPC) mit Dreifachdetektor.

Der mindestens eine Zusatzstoff kann auch in Masterbatchform zugegeben werden. Bevorzugt wird als Basispolymer des Masterbatches ein Polyamid verwendet. Dieses Polyamid ist vorzugsweise ausgewählt aus der Gruppe bestehend aus den PA 6, PA 66, PA 12, PA 1012, PA 1212, PA 6/12, PA 6/66, PA 6/69 und deren Mischungen oder besteht aus dem Copolyamid (A) selbst.

### Formkörper

Erfindungsgemäß werden ebenso Formkörper bereitgestellt, die aus den zuvor beschriebenen Copolyamiden oder Formmassen herstellbar sind. Die erfindungsgemäßen Formkörper können aus der erfindungsgemäßen Copolyamiden oder Polyamid-Formmasse über die gängigen Verarbeitungstechniken, wie z.B. Spritzgussverfahren hergestellt werden.

Eine bevorzugte Ausführungsform sieht vor, dass der Formkörper ausgewählt ist aus der Gruppe bestehend aus unlackierten Sichtteilen mit oder ohne Funktion, im Fahrzeuginnenraum oder Kofferraum, Haushalt, Maschinenbau, an Elektrogeräten, Elektronikgeräten, Haushaltsgeräten, Möbeln, insbesondere Lüfterlamellen, Schalthebel, Schaltwippen, Tasten, Drehreglern, Haltegriffen, Bedienelementen der Sitzverstellung, Bedienelementen an der Lenksäule, Bedienhebeln, Bedienelementen, Schubladen, Halterungen für Zusatzgeräte, Getränkehaltern, Gepäckhaken, Abdeckungen, Lichtschaltern, Rasierkopf, Scherenteile, Gewindestangen, insbesondere für Insulinpumpen, Gehäusen und Dekorelementen.

### Verwendungen

Weiterhin betrifft die vorliegende Erfindung die Verwendung der oben definierten erfindungsgemäßen Polyamid-Formmasse zur Herstellung zur Herstellung von unlackierten Sichtteilen mit oder ohne Funktion, im Fahrzeuginnenraum oder Kofferraum, Haushalt, Maschinenbau, an Elektrogeräten, Elektronikgeräten, Haushaltsgeräten, Möbeln, insbesondere Lüfterlamellen, Schalthebel, Schaltwippen, Tasten, Drehreglern, Haltegriffen, Bedienelementen der Sitzverstellung, Bedienelementen an der Lenksäule, Bedienhebeln, Bedienelementen, Schubladen, Halterungen für Zusatzgeräte, Getränkehaltern, Gepäckhaken, Abdeckungen, Lichtschaltern, Rasierkopf, Scherenteile, Gewindestangen, insbesondere für Insulinpumpen, Gehäusen und Dekorelementen.

Anhand der nachfolgenden Beispiele soll der erfindungsgemäße Gegenstand näher erläutert werden.

### Beispiele und Vergleichsbeispiele

### Messmethoden

### Relative Viskosität

Die relative Viskosität wurde gemäß ISO 307 (2007) bei 20 °C bestimmt. Dazu wurden 0,5 g Polymergranulat in 100 ml m-Kresol eingewogen, die Berechnung der relativen Viskosität (RV) nach RV = t/t₀ erfolgte in Anlehnung an Abschnitt 11 der Norm.

### Glasübergangstemperatur (Tg), Kristallisationswärme, Schmelzwärme und Schmelzpunkt

Die Bestimmung erfolgte nach ISO 11357-3 (2013) an Granulat.

Die Differential Scanning Calorimetry (DSC) wurde bei jeder der drei Aufheizungen mit einer Aufheizrate von 20 K/min durchgeführt. Nach der ersten Aufheizung wird mit 20 K/min abgekühlt. Nach der zweiten Aufheizung wird die Probe in Trockeneis abgeschreckt. Die Glasübergangstemperatur (Tg) wird bei der dritten Aufheizung bestimmt, der Schmelzpunkt bei der zweiten. Die Kristallisationstemperatur und die Kristallisationsgeschwindigkeit werden beim Abkühlen nach der ersten Aufheizung bestimmt. Beim Schmelzpunkt wird die Temperatur am Peakmaximum angegeben. Der Mittelpunkt des Glasübergangsbereichs, welcher als Glasübergangstemperatur (Tg) angegeben wird, wurde nach der Methode "Half height" ermittelt.

### Glanzwert bei 60°

Der Glanzwert bei einem Messwinkel von 60° wurde nach DIN EN ISO 2813 (2015) auf einem Gloss Tector (ATP Messtechnik GmbH, Deutschland) bei 23 °C an Platten mit den Dimensionen 60 x 60 x 2 mm bestimmt. Die Angabe erfolgt in Glanzeinheiten (GU).

### Zug E-Modul

Die Bestimmung des Zug-E-Moduls wurde gemäß ISO 527 (2012) bei 23°C mit einer Zuggeschwindigkeit von 1 mm/min an einem ISO-Zugstab (Typ A1, Masse 170 x 20/10 x 4) hergestellt gemäß der Norm: ISO/CD 3167 (2003), durchgeführt.

### Molmassenbestimmung

Die Bestimmung der Molmasse erfolgt mittels Gel-Permeations-Chromatographie (GPC) mit Dreifachdetektor: Brechungsindex, Viskosität und Lichtstreuung (7° und 90°).

Zur Messung werden die Proben in Hexafluorisopropanol (HFIP)gelöst (ca. 5 mg Polymer in 1 ml) und vor dem Abfüllen in Vials durch Einweg-Spritzenfilter filtriert.

| | | |
|---|---|---|
| Gerät: | | Malvern OMNISEC GPC-System |
| Software: | | Malvern OMNISEC Version 10.41 |
| Säule: | | Malvern HFIP3000 + HFIP6000M |
| | 300 x 7.8 mm, 10 µm Partikelgrösse | |
| Eluent: | HFIP mit 0.1 M Kaliumtrifluoracetat | |
| Säulentemperatur: | | 40 °C |
| Detektortemperatur: | | 40 °C |
| Flussrate: | | 1,0 ml/min |

Die Molekularmassen (Zahlenmittel Mn und Gewichtsmittel Mw) werden mit der Dreifach-Detektions-Methode ermittelt. Die Kalibrierung des GPC-Systems erfolgt mit einem monodispersen PMMA-Standard. Es werden jeweils drei Bestimmungen durchgeführt. Angegeben wird das arithmetische Mittel der Molekularmasse.

Das Lösungsmittel HFIP wurde in HPLC-Qualität bei Fluorochem, Deutschland bezogen, das Kaliumtrifluoracetat bei Sigma-Aldrich, Schweiz.

Die Einwegfilter sind erhältlich bei Chemie Brunschwig, Schweiz unter der Bezeichnung SFPTFE0250022NBC (PTFE-Membran, Porengrösse 0,45 µm, Filterdurchmesser 25 mm).

Die Einwegspritzen sind erhältlich bei VWR International GmbH, Deutschland.

### Herstellung der Prüfkörper

Zur Herstellung der Prüfkörper wurde Granulat mit einem Wassergehalt von weniger als 0,1 Gew.-% verwendet.

Die Prüfkörper wurden auf einer Spritzgussmaschine der Firma Arburg, Modell Allrounder 420 C 1000-250 hergestellt. Dabei wurden vom Einzug zur Düse auf- und absteigende Zylindertemperaturen verwendet.

### ISO-Zugstäbe

| | |
|---|---|
| Zylindertemperaturen: | 260/265/270/275/280/275 °C |
| Werkzeugtemperatur: | 110 °C |

### Platten 60 x 60 x 2 mm

| | |
|---|---|
| Zylindertemperaturen: | 270/275/280/285/290/285 °C |
| Werkzeugtemperatur: | 110 °C |

Für die Herstellung der Platten wurde ein poliertes Werkzeug verwendet.

Die Prüfkörper wurden, sofern nichts anderes angegeben ist, in trockenem Zustand verwendet; dazu wurden sie nach dem Spritzguss mindestens 48 h bei Raumtemperatur in trockener Umgebung, d.h. über Silicagel, gelagert.

Die Platten 60 x 60 x 2 mm für die Glanzwertmessung im konditionierten Zustand wurden nach ISO 1110 für 7 Tage bei 70 °C und 62 % relativer Feuchte gelagert.

### Ausgangsmaterialien

Die in den Beispielen und Vergleichsbeispielen verwendeten Monomere sind in Tabelle 1 und die verwendeten Komponenten (II) und (III) der PolyamidFormmassen in Tabelle 2 zusammengefasst.

**Tabelle 1 In den Beispielen und Vergleichsbeispielen eingesetzte Monomere**

| **Monomer** | **CAS-Nr.** | **Schmelz-bereich [°C]** | **Handelsname** | **Hersteller** |
|---|---|---|---|---|
| 1,6-Hexandiamin (a1) | 124-09-4 | 39 bis 42 | - | BASF SE, Deutschland |
| 1,3-Bis(aminomethyl)-cyclohexan (a2) | 2579-20-6 | < -70 | 1,3-BAC | Mitsubishi Gas Chemical Company, Japan |
| Bis(4-amino-cyclohexyl)-methan (a3-1) | 6864-37-5 | - 7 bis - 0.6* | Laromin C260 | BASF SE, Deutschland |
| Bis(4-amino-cyclohexyl)methan (a3-2) | 1761-71-3 | -16 bis 46 | 4,4-Diaminodicyclohexylmethan | BASF SE, Deutschland |
| Isophorondiamin (a3-3) | 2855-13-2 | 10 | - | BASF SE, Deutschland |
| 1,6-Hexandisäure (a4) | 124-04-9 | 151 | - | BASF SE, Deutschland |
| Isophthalsäure (a5-1) | 121-91-5 | 345 bis 348 | - | Flint Hills Resources, Schweiz |
| Terephthalsäure (a5-2) | 100-21-0 | > 400 | - | GMS - Chemie-Handelsges.m.b.H., Deutschland |

**Tabelle 2 In den Beispielen und Vergleichsbeispielen eingesetzte Komponenten (II) und (III)**

| **Komponente** | **Beschreibung** | **Handelsname** | **Hersteller** |
|---|---|---|---|
| Glasfaser (II-1) | Runde Glasfaser, 4.5 mm lang, Durchmesser 10 µm | Vetrotex 995 EC10-4.5 | Saint-Gobain Vetrotex, Frankreich |
| Glasfaser (II-2) | Flache Glasfaser, 3 mm lang, Hauptquerschnittsachse 28 µm, Nebenquerschnittachse 7 µm | Nittobo CSG3PA-820 | Nitto Boseki Co., Ltd., Japan |
| Kaolin (II-3) | CAS-Nr. 1332-58-7 | Translink 445 | BASF SE, Deutschland |
| Mica (II-4) | CAS-Nr. 12001-26-2 | Mica HLM 100 | Kärntner Montan-industrie, Österreich |
| Antioxidans (III-1) | Ethylenbis(oxyethylen)bis[3-(5-tert-butyl-4-hydroxy-m-tolyl)propionat] CAS-Nr.: 36443-68-2 | Irganox 245 | BASF SE, Deutschland |
| Schwarz-Masterbatch (III-2) | 25 Gew.-% Ruß in Radipol A45 (PA66) der RadiciChimica SpA, Italien | - | EMS-CHEMIE AG, Schweiz |
| Zusatzstoff-mischung (IIIM) | Gewichtsverhältnis (III-1):(III-2) = 1 : 5 | - | - |

### Allgemeine Herstellungsvorschrift für die Copolyamide

Die Herstellung der erfindungsgemäßen Copolyamide erfolgt auf an sich bekannte Weise in bekannten, rührbaren Druckautoklaven mit einem Vorlagegefäß und einem Reaktionsgefäß.

Im Vorlagegefäß wird deionisiertes Wasser vorgelegt und die Monomere und etwaige Zusatzstoffe zugegeben. Danach wird mehrfach mit Stickstoffgas inertisiert. Unter Rühren wird auf 180 bis 230 °C unter dem sich einstellenden Druck aufgeheizt, um eine homogene Lösung zu erhalten. Diese Lösung wird durch ein Sieb in das Reaktionsgefäß gepumpt und dort auf die gewünschte Reaktionstemperatur von 250 bis 300 °C bei einem Druck von maximal 30 bar aufgeheizt. Der Ansatz wird in der Druckphase für 2 bis 4 Stunden auf der Reaktionstemperatur gehalten. In der anschließenden Entspannungsphase wird der Druck innerhalb von 1 bis 2 Stunden auf atmosphärischen Druck reduziert, wobei die Temperatur leicht sinken kann. In der folgenden Entgasungsphase wird der Ansatz bei atmosphärischem Druck für 0,5 bis 6 Stunden auf einer Temperatur von 250 bis 300 °C gehalten. Die Polymerschmelze wird in Strangform ausgetragen, im Wasserbad bei 10 bis 80 °C abgekühlt und granuliert. Das Granulat wird bei 60 bis 120 °C unter Stickstoff oder im Vakuum auf einen Wassergehalt von weniger als 0,1 Gew.-% getrocknet.

Geeignete Katalysatoren zur Beschleunigung der Polykondensationsreaktion sind phosphorhaltige Säuren wie beispielsweise H₃PO₂, H₃PO₃, H₃PO₄, deren Salze oder organischen Derivate. Die Katalysatoren werden bevorzugt im Bereich von 0,01 bis 0,5 Gew.-%, besonders bevorzugt von 0,03 bis 0,1 Gew.-%, bezogen auf das Polyamid, zugegeben.

Geeignete Entschäumer zur Vermeidung der Schaumbildung während der Entgasung sind wässrige, 10 %-ige Emulsionen, die Silicone oder Siliconderivate enthalten und bevorzugt in Mengen von 0,01 bis 1,0 Gew.-%, besonders bevorzugt von 0,01 bis 0,10 Gew.-%, bezogen auf das Polyamid, eingesetzt werden.

Die Einstellung der relativen Viskosität und damit der Molmasse kann in an sich bekannter Weise, z.B. über monofunktionelle Amine oder Carbonsäuren, und/oder difunktionelle Diamine oder Dicarbonsäuren als Kettenregler erfolgen. Bevorzugte monofunktionelle Kettenregler für die erfindungsgemäßen Copolyamide sind Benzoesäure, Essigsäure, Propionsäure, Buttersäure, Valeriansäure, Capronsäure, Laurinsäure, Stearinsäure, 2-Ethylhexansäure, Cyclohexansäure, Propylamin, Butylamin, Pentylamin, Hexylamin, 2-Ethylhexylamin, n-Octylamin, n-Nonylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, Anilin oder Triacetondiamin. Die Kettenregler können einzeln oder in Kombination verwendet werden. Es können auch andere monofunktionelle Verbindungen als Kettenregler eingesetzt werden, die mit einer Amino- oder Säuregruppe reagieren können wie Anhydride, Isocyanate, Säurehalogenide, Amide oder Ester. Die bevorzugte Einsatzmenge der monofunktionellen Kettenregler liegt bei 10 bis 200 mmol pro kg Copolyamid.

### Herstellung des Copolyamides gemäß Beispiel 2

Im Folgenden wird die Herstellung des erfindungsgemäßen Copolyamids PA 66/1,3-BAC6 aus Beispiel 2 erläutert:
Im Vorlagegefäss eines 20 I Druckautoklaven wurden 1,80 kg deionisiertes Wasser vorgelegt und 3,68 kg 1,6-Hexandisäure eingerührt. Danach wurden 1,63 kg 1,3-Bis(aminomethyl)-cyclohexan, 1,63 kg 1,6-Hexandiamin, 1,2 g Antifoam RD 10 Gew.-% Emulsion als Entschäumer und zum Schluss 15 g Benzoesäure als Kettenregler zugegeben. Daraufhin wurde wie folgt verfahren:
- Nach 10-maliger Inertisierung wurde bis auf 210 °C aufgeheizt. Die homogene Lösung wurde bei 210 °C durch ein Sieb in das Reaktionsgefäß gepumpt.
- Unter Rühren wurde dort der Ansatz auf 290 °C aufgeheizt und 2 Stunden bei 20 bar in der Druckphase gehalten. Innerhalb von 1,5 Stunden wurde auf atmosphärischen Druck entspannt und anschließend bei 290 °C 1 Stunde entgast.
- Die Polymerschmelze wurde ausgetragen, im Wasserbad (20 °C) abgekühlt und granuliert. Das Granulat wurde bei 100 °C im Vakuum (30 mbar) auf einen Wassergehalt von unter 0,1 Gew.-% getrocknet.

Die relative Viskosität des Produkts betrug 1,74, die Glasübergangstemperatur 72 °C und der Schmelzpunkt 220 °C.

### Allgemeine Herstellungsvorschrift für die erfindungsgemäßen Polyamid-Formmassen

Zur Herstellung der erfindungsgemäßen Polyamid-Formmasse werden die Komponenten (I), (II) und gegebenenfalls (III) auf üblichen Compoundiermaschinen, wie z.B. ein- oder zweiwelligen Extrudern oder Schneckenknetern gemischt. Die Komponenten werden dabei einzelnen über gravimetrische oder volumetrische Dosierwaagen in den Einzug oder jeweils in einen Sidefeeder dosiert oder in Form eines Dryblends zugeführt.

Werden Zusatzstoffe (Komponente (III)) verwendet, können diese direkt oder in Form eines Masterbatches eingebracht werden. Bei dem Trägermaterial des Masterbatches handelt es sich bevorzugt um ein Polyamid oder ein Polyolefin. Unter den Polyamiden eignet sich dazu besonders das Copolyamid (I). Zur Dryblend-Herstellung wird das getrocknete Granulat des Copolyamids und gegebenenfalls die Zusatzstoffe (III) in einem geschlossenen Behälter vermischt. Diese Mischung wird mittels eines Taumelmischers, Rhönradmischers oder Taumeltrockners 10 bis 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 250 bis 310 °C, wobei die Temperatur des ersten Zylinders unter 90 °C eingestellt werden kann. Vor der Düse kann entgast werden. Dies kann mittels Vakuum oder atmosphärisch erfolgen. Die Schmelze wird in Strangform ausgetragen, im Wasserbad bei 10 bis 80 °C abgekühlt und anschließend granuliert. Alternativ kann die Schmelze auch durch eine Lochplatte mit Schneideinrichtung in ein Wasserbad gepresst und die abgeschnittenen Granulate in einer Nachbehandlungsstrecke abgetrennt werden (Unterwassergranulation). Das Granulat wird bei 60 bis 120 °C unter Stickstoff oder im Vakuum auf einen Wassergehalt von unter 0,1 Gew.-% getrocknet.

### Herstellung der Polyamid-Formmasse gemäß Beispiel 18

Das getrocknete Granulat des Copolyamids aus Beispiel 2 und die Zusatzstoffe (IIIM) wurden zu einem Dryblend vermischt, und zwar in dem in der Tabelle 6, Beispiel 18 angegebenen Verhältnis. Diese Mischung wurde mittels eines Taumelmischers ca. 20 Minuten lang homogenisiert.

Die Polyamid-Formmasse wurde auf einem Zweiwellenextruder der Firma Werner & Pfleiderer Typ ZSK 25 hergestellt. Das Dryblend wurde dabei über eine Dosierwaage in den Einzug dosiert. Die Glasfasern (II-1) wurden mittels einer Dosierwaage und eines Sidefeeders 6 Gehäusezonen vor der Düse in die Schmelze gefördert.

Die Temperatur des ersten Gehäuses wurde auf 50 °C eingestellt, diejenige der restlichen Gehäuse auf 260 bis 280 °C. Es wurde eine Drehzahl von 250 U/min und ein Durchsatz von 15 kg/h verwendet. Es wurde nicht entgast. Der Schmelzestrang wurde im Wasserbad abgekühlt, geschnitten und das erhaltene Granulat bei 100 °C für 24 h im Vakuum (30 mbar) auf einen Wassergehalt von unter 0,1 Gew.-% getrocknet.

### Versuchsergebnisse

Von den erfindungsgemäßen Copolyamiden wurden die relativen Viskosität (RV), die Glasübergangstemperatur, der Schmelzpunkt, die Kristallisationstemperatur und die Kristallisationsgeschwindigkeit bestimmt. Die entsprechenden Werte sind für die erfindungsgemäßen Beispiele 1 bis 5 in Tabelle 3, für die erfindungsgemäßen Beispiele 6 bis 9 in Tabelle 4 und für die Vergleichsbeispiele 13 bis 16 in Tabelle 5 dargestellt.

Alle in den Beispielen und Vergleichsbeispielen hergestellten oder verwendeten Copolyamide enthalten Antifoam RD 10 Gew.-% Emulsion (Silikon-Emulsion, Hersteller: Dow Corning S.A., Belgien) als Entschäumer und Benzoesäure als Kettenregler.

Die erfindungsgemäßen Formmassen der Beispiele 17 bis 29 wurden hinsichtlich des Glanzwertes und des Zug-E-Moduls untersucht. Die Ergebnisse dieser Untersuchungen sind in Tabellen 6 und 7 dargestellt.

Ebenso wurden nicht-erfindungsgemäße Formmassen der Vergleichsbeispiele 33 bis 37 hinsichtlich des Glanzwertes und des Zug-E-Moduls unter den gleichen Messbedingungen untersucht. Die Resultate der Vergleichsbeispiele sind in Tabelle 8 zusammengefasst.

**Tabelle 3 Erfindungsgemäße Beispiele 1 bis 5 für das Copolyamid**

| **Komponente** | **Einheit** | **Beispiele** | | | | |
|---|---|---|---|---|---|---|
| | | **1** | **2** | **3** | **4** | **5** |
| 1,6-Hexandiamin (a1) | Mol-% | 27,5 | 30,0 | 32,5 | 35,0 | 37,5 |
| 1,3-Bis(aminomethyl)cyclohexan (a2) | Mol-% | 22,5 | 20,0 | 17,5 | 15,0 | 12,5 |
| 1,6-Hexandisäure (a4) | Mol-% | 50,0 | 50,0 | 50,0 | 50,0 | 50,0 |

| **Messwerte** | | | | | | |
|---|---|---|---|---|---|---|
| relative Viskosität (RV)^{a} | - | 1,75 | 1,74 | 1,79 | 1,81 | 1,85 |
| Glasübergangstemperatur* | °C | 74 | 72 | 69 | 68 | 67 |
| Schmelzpunkt** | °C | 214 | 220 | 227 | 230 | 235 |
| Kristallisationstemperatur*** | °C | 161 | 175 | 180 | 188 | 197 |
| Kristallisationsgeschwindigkeit*** | J/g min | 22 | 35 | 39 | 45 | 41 |

| | | | | | | |
|---|---|---|---|---|---|---|
| ^{a} RV relative Viskosität, gemessen an einer Lösung von 0.5 g Polyamid in 100 ml m-Kresol bei 20 °C ^{∗} Werte der 3. Aufheizung ^{∗∗} Werte der 2. Aufheizung ^{∗∗∗} Werte beim Abkühlen nach der 1. Aufheizung | | | | | | |

**Tabelle 4 Erfindungsgemäße Beispiele 6 bis 9 für das Copolyamid**

| **Komponente** | **Einheit** | **Beispiele** | | | | | | |
|---|---|---|---|---|---|---|---|---|
| | | | **6** | | **7** | | **8** | **9** |
| 1,6-Hexandiamin (a1) | Mol-% | | 32,5 | | 32,5 | | 35,0 | 35,0 |
| 1,3-Bis(aminomethyl)cyclohexan (a2) | Mol-% | | 15,0 | | 15,0 | | 15,0 | 15,0 |
| Bis(4-amino-3-methyl-cyclohexyl)methan (a3-1) | Mol-% | | 2,5 | | - | | - | - |
| Bis(4-amino-cyclohexyl)methan (a3-2) | Mol-% | | - | | 2,5 | | - | - |
| Isophorondiamin (a3-3) | Mol-% | | - | | - | | - | - |
| Isophthalsäure (aS-1) | Mol-% | | - | | - | | 5,0 | - |
| Terephthalsäure (a5-2) | Mol-% | | - | | - | | - | 5,0 |
| 1,6-Hexandisäure (a4) | Mol-% | | 50,0 | | 50,0 | | 45,0 | 45,0 |

| **Messwerte** | | | | | | | | |
|---|---|---|---|---|---|---|---|---|
| relative Viskosität (RV)^{a} | - | | 1,79 | | 1,83 | | 1,80 | 1,83 |
| Glasübergangstemperatur* | °C | | 72 | | 72 | | 78 | 78 |
| Schmelzpunkt** | °C | | 224 | | 224 | | 223 | 225 |
| Kristallisationstemperatur*** | °C | | 179 | | 181 | | 158 | 163 |
| Kristallisationsgeschwindigkeit*** | J/g min | | 33 | | 37 | | 16 | 21 |

| | | | | | | | | |
|---|---|---|---|---|---|---|---|---|
| ^{a} RV relative Viskosität, gemessen an einer Lösung von 0.5 g Polyamid in 100 ml m-Kresol bei 20 °C * Werte der 3. Aufheizung ^{∗∗} Werte der 2. Aufheizung ^{∗∗∗} Werte beim Abkühlen nach der 1. Aufheizung | | | | | | | | |

**Tabelle 5 Vergleichsbeispiele 13 bis 16 für das Copolyamid**

| **Komponente** | **Einheit** | **Vergleichsbeispiele** | | | |
|---|---|---|---|---|---|
| | | **13** | **14** | **15** | **16** |
| 1,6-Hexandiamin (a1) | Mol-% | 45.0 | 40.0 | 0.0 | 50.0 |
| 1,3-Bis(aminomethyl)cyclohexan (a2) | Mol-% | 5.0 | 10.0 | 50.0 | 0.0 |
| Isophthalsäure (a5-1) | Mol-% | - | - | - | - |
| Terephthalsäure (a5-2) | Mol-% | - | - | - | - |
| 1,6-Hexandisäure (a4) | Mol-% | 50.0 | 50.0 | 50.0 | 50.0 |

| **Messwerte** | | | | | |
|---|---|---|---|---|---|
| relative Viskosität (RV)^{a} | - | 1.84 | 1.90 | 1.60 | 1.79 |
| Glasübergangstemperatur* | °C | 59 | 61 | 110 | 55 |
| Schmelzpunkt** | °C | 250 | 240 | 229 | 261 |
| Kristallisationstemperatur*** | °C | 216 | 205 | k | 229 |
| Kristallisationsgeschwindigkeit*** | J/g min | 48 | 37 | k | 32 |

| | | | | | |
|---|---|---|---|---|---|
| ^{a} RV relative Viskosität, gemessen an einer Lösung von 0.5 g Polyamid in 100 ml m-Kresol bei 20 °C * Werte der 3. Aufheizung ^{∗∗} Werte der 2. Aufheizung ^{∗∗∗} Werte beim Abkühlen nach der 1. Aufheizung k Keine Kristallisation beim Abkühlen nach der 1. Aufheizung | | | | | |

**Tabelle 6 Erfindungsgemäße Beispiele 17 bis 25 für die Polyamid-Formmasse**

| **Komponente** | **Einheit** | **Beispiele** | | | | | | | | |
|---|---|---|---|---|---|---|---|---|---|---|
| | | **17** | **18** | **19** | **20** | **21** | **22** | **23** | **24** | **25** |
| Copolyamid (I) PA 66/1,3-BAC6 aus | - | Bsp. 1 | Bsp. 2 | Bsp. 3 | Bsp. 4 | Bsp. 5 | Bsp. 2 | Bsp. 2 | Bsp. 2 | Bsp. 2 |
| Copolyamid (I) Menge | Gew.-% | 47,6 | 47,6 | 47,6 | 47,6 | 47,6 | 47,6 | 49,6 | 57,6 | 47,6 |
| Glasfasern (II-1), rund | Gew.-% | 50,0 | 50,0 | 50,0 | 50,0 | 50,0 | - | 50,0 | - | 25,0 |
| Glasfasern (II-2), flach | Gew.-% | - | - | - | - | - | 50,0 | - | - | - |
| Kaolin (II-3) | Gew.-% | - | - | - | - | - | - | - | 40,0 | - |
| Mica (II-4) | Gew.-% | - | - | - | - | - | - | - | - | 25,0 |
| Zusatzstoffmischung (IIIM) | Gew.-% | 2,4 | 2,4 | 2,4 | 2,4 | 2,4 | 2,4 | - | 2,4 | 2,4 |
| Antioxidans (III-1) | Gew.-% | - | - | - | - | - | - | 0,4 | - | - |

| **Messwerte** | | | | | | | | | | |
|---|---|---|---|---|---|---|---|---|---|---|
| Glanzwert, 60°, trocken | GU | 83 | 88 | 86 | 78 | 81 | 90 | 90 | 93 | 91 |
| Glanzwert, 60°, konditioniert | GU | 76 | 78 | 75 | 78 | 79 | 84 | 80 | 91 | 90 |
| Zug-E-Modul | MPa | 16300 | 16500 | 16600 | 16800 | 16900 | 16800 | 16600 | 6400 | 16700 |

**Tabelle 7 Erfindungsgemäße Beispiele 26 bis 29 32 für die Polyamid-Formmasse**

| **Komponente** | **Einheit** | **Beispiele** | | | | | | |
|---|---|---|---|---|---|---|---|---|
| | | | **26** | | **27** | | **28** | **29** |
| Copolyamid (I) PA 66/1,3-BAC6/MACM6 aus | - | | Bsp. 6 | | - | | - | - |
| Copolyamid (I) PA 66/1,3-BAC6/PACM6 aus | - | | - | | Bsp. 7 | | - | - |
| Copolyamid (I) PA 66/1,3-BAC6/IPD6 aus | - | | - | | - | | - | - |
| Polyamid (I) PA 66/6I//1,3-BAC6/1,3-BACI aus | - | | - | | - | | Bsp. 8 | - |
| Polyamid (I) PA 66/6T/1,3-BAC6/1,3-BACT aus | - | | - | | - | | - | Bsp. 9 |
| Copolyamid (I) Menge | Gew.-% | | 47,6 | | 47,6 | | 47,6 | 47,6 |
| Glasfasern (II-1), rund | Gew.-% | | 50,0 | | 50,0 | | 50,0 | 50,0 |
| Zusatzstoffmischung (IIIM) | Gew.-% | | 2,4 | | 2,4 | | 2,4 | 2,4 |

| **Messwerte** | | | | | | | | |
|---|---|---|---|---|---|---|---|---|
| Glanzwert, 60°, trocken | GU | | 80 | | 80 | | 77 | 74 |
| Glanzwert, 60°, konditioniert | GU | | 80 | | 80 | | 74 | 72 |
| Zug-E-Modul | MPa | | 16500 | | 16600 | | 16600 | 17000 |

**Tabelle 8 Vergleichsbeispiele 33 bis 37 für die Polyamid-Formmasse**

| **Komponente** | **Einheit** | **Vergleichsbeispiele** | | | | |
|---|---|---|---|---|---|---|
| | | **33** | **34** | **35** | **36** | **37** |
| Copolyamid PA 66/1,3-BAC6 aus | | V-bsp. 13 | V-bsp. 14 | V-bsp. 15 | V-bsp. 16 | - |
| Polyamid PA 66/1,3-BAC6 aus | - | - | - | - | - | Bsp. 2 |
| Copolyamid Menge | Gew.-% | 47.6 | 47.6 | 47.6 | 47.6 | 97.6 |
| Glasfasern (II-1), rund | Gew.-% | 50.0 | 50.0 | 50.0 | 50.0 | - |
| Zusatzstoffmischung (IIIM) | Gew.-% | 2.4 | 2.4 | 2.4 | 2.4 | 2.4 |

| **Messwerte** | | | | | | |
|---|---|---|---|---|---|---|
| Glanz, 60°, trocken | GU | 57 | 57 | 65 | 48 | 93 |
| Glanz, 60°, konditioniert | GU | 49 | 57 | 2 | 43 | 89 |
| Zug-E-Modul | MPa | 16700 | 17000 | 15600 | 16800 | 2600 |

### Diskussion der Ergebnisse

Im Vergleich der erfindungsgemäßen Cppolyamide der Beispiel 1 bis 9 zu den nicht-erfindungsgemäßen Copolaymiden der Vergleichsbeispiele 13 bis 16 zeigen die erfindungsgemäßen Copolyamide die niedrigere Schmelztemperatur und Kristallisationstemperatur.

Die Platten der erfindungsgemäßen Polyamid-Formmassen der Beispiele 17 bis 23 und 26 bis 29 aus den mit Glasfasern gefüllten erfindungsgemäßen Copolyamiden der Beispiele 1 bis 9 zeigen durchweg einen besseren Glanzwert als die Platten der Vergleichsmaterialien der Vergleichsbeispiele 33, 34 und 36 und zwar sowohl trocken als auch konditioniert.

Die besten Glanzwerte besitzen Platten aus den Polyamid-Formmassen der Beispiele 24 und 25, die nur mit Mineral bzw. einer Mischung aus Glasfasern und Mineral gefüllt sind.

Bei dem mit Glasfasern gefüllten PA 1,3-BAC6 des Vergleichsbeispiels 35 konnten die Platten für die Prüfung des Glanzwertes nur mit einer Werkzeugtemperatur von 80 °C gespritzt werden, da höhere Werkzeugtemperaturen starke Auswerferabdrücke und zu lange Zykluszeiten verursachen. Der Glanzwert erreicht im trockenen Zustand zwar einen hohen Wert, dieser sinkt jedoch durch die Konditionierung stark ab, da es dabei zur Nachkristallisation kommt.

Die Platten aus dem mit Glasfasern gefüllten PA 66 des Vergleichsbeispiels 36 zeigen dessen mangelhafte Eignung für Sichtteile, da die Oberflächenqualität unzureichend ist.

Um einen Zug-E-Modul von mindestens 5000 MPa erreichen zu können, muss die erfindungsgemäße Polyamid-Formmasse Füllstoff enthalten, wie der Polyamid-Formmasse des Vergleichsbeispiels 37 zu entnehmen ist.

## Patentansprüche

1. Teilkristallines Copolyamid gebildet aus den folgenden Monomeren (a1) bis (a5):
(a1) 23 bis 37,5 Mol-% 1,6-Hexandiamin;
(a2) 12,5 bis 22 Mol-% 1,3-Bis(aminomethyl)-cyclohexan;
(a3) 0 bis 5 Mol-% mindestens ein Diamin mit 2 bis 35 Kohlenstoffatomen, verschieden von den Monomeren (a1) und (a2);
(a4) 45 bis 50 Mol-% 1,6-Hexandisäure; und
(a5) 0 bis 5 Mol-% mindestens eine Dicarbonsäure mit 2 bis 44 Kohlenstoffatomen, verschieden von dem Monomer (a4);
wobei die Anteile der Monomere (a1), (a2) und (a3) auf die Summe der eingesetzten Diamine bezogen sind und sich auf 50 Mol-% ergänzen; und
wobei die Anteile der Monomere (a4) und (a5) auf die Summe der eingesetzten Dicarbonsäuren bezogen sind und sich auf 50 Mol-% ergänzen; und
wobei sich die Monomere (a1) bis (a5) auf 100 Mol-% ergänzen.

2. Copolyamid nach Anspruch 1, **dadurch gekennzeichnet, dass**
• der Anteil an Monomer (a1) im Copolyamid im Bereich von 23 bis 36 Mol-%, bevorzugt im Bereich von 25 bis 34 Mol-%, besonders bevorzugt im Bereich von 27,5 bis 32,5 Mol-% liegt; und/oder
• der Anteil an Monomer (a2) im Copolyamid im Bereich von 14 bis 22 Mol-%, bevorzugt im Bereich von 16 bis 20 Mol-%, besonders bevorzugt im Bereich von 17,5 bis 20 Mol-% liegt; und/oder
• der Anteil an Monomer (a3) im Copolyamid im Bereich von 0 bis 2,5 Mol-% liegt;
wobei sich die Anteile der Monomere (a1), (a2) und (a3) auf die Summe der eingesetzten Diamine beziehen und sich auf 50 Mol-% ergänzen.

3. Copolyamid gemäß einem der vorhergehenden Ansprüche, **dadurch gekennzeichnet, dass**
• der Anteil an Monomer (a4) im Copolyamid im Bereich von 47,5 bis 50 Mol-% liegt; und/oder
• der Anteil an Monomer (a5) im Copolyamid im Bereich von 0 bis 2,5 Mol-% liegt;
wobei sich die Anteile der Monomere (a4) und (a5) auf die Summe der eingesetzten Dicarbonsäuren beziehen und sich auf 50 Mol-% ergänzen.

4. Copolyamid nach einem der vorhergehenden Ansprüche, **dadurch gekennzeichnet, dass**
das mindestens eine Monomer (a3) ausgewählt ist aus der Gruppe bestehend aus Ethylendiamin, Butandiamin, Pentandiamin, Methylpentandiamin, 1,8-Octandiamin, Methyloctandiamin, 1,9-Nonandiamin, 1,10-Decandiamin, 1,11-Undecandiamin, 1,12-Dodecandiamin, Trimethylhexamethylendiamin, 1,4-Ccyclohexandiamin, 1,3-Cyclohexandiamin, Bis-(4-amino-3-methylcyclohexyl)-methan, Bis-(4-amino-cyclohexyl)-methan, Isophorondiamin, 1,4-Bis(aminomethyl)-cyclohexan, m-Xylylendiamin, p-Xylylendiamin, Bis(aminocyclohexyl)propan und seinen Alkylderivaten, Norbornandiamin und Bis(aminomethyl)norbornan und/oder das mindestens eine Monomer (a5) ausgewählt ist aus der Gruppe bestehend aus Isophthalsäure, Terephthalsäure, Naphthalindicarbonsäure, 1,9-Nonandisäure, 1,10-Decandisäure, 1,11-Undecandisäure, 1,12-Dodecandisäure, 1,13-Tridecandisäure, 1,14-Tetradecandisäure, 1,15-Pentadecansäure, 1,16-Hexadecandisäure, 1,17-Heptadecandisäure, 1,18-Octadecandisäure, Arachinsäure, Japansäure, Behensäure, Cycloheaxandisäure, Phenylindandicarbonsäure, Phenylendioxydiessigsäure und Dimerfettsäure mit 36 oder 44 Kohlenstoffatomen.

5. Copolyamid nach einem der vorhergehenden Ansprüche, **dadurch gekennzeichnet, dass** die Copolyamide eine relative Viskosität, gemessen mit 0,5 g in 100 ml m-Kresol bei 20 °C von 1,45 bis 2,10, bevorzugt 1,50 bis 2,05, besonders bevorzugt 1,55 bis 1,98 aufweisen.

6. Copolyamid nach einem der vorhergehenden Ansprüche, **dadurch gekennzeichnet, dass** die Copolyamide mindestens eine der folgenden Eigenschaften, bestimmt nach ISO 11357-3 (2013), aufweist:
• eine Glasübergangstemperatur im Bereich von 50 bis 200 °C, bevorzugt von 60 bis 190 °C, besonders bevorzugt im Bereich von 65 bis 90 °C; und/oder
• eine Schmelztemperatur im Bereich von 180 bis 260 °C, bevorzugt von 205 bis 245 °C, besonders bevorzugt im Bereich von 210 bis 235 °C; und/oder
• eine Kristallisationstemperatur im Bereich von 130 bis 200 °C, bevorzugt im Bereich von 140 bis 200; und/oder
• eine Kristallisationsgeschwindigkeit im Bereich von 12 bis 50 J/g min, bevorzugt im Bereich von 15 bis 47 J/g min, besonders bevorzugt im Bereich von 23 bis 45 J/g min.

7. Polyamid-Formmasse enthaltend mindestens ein Copolyamid nach einem der vorhergehenden Ansprüche.

8. Polyamid-Formmasse nach Anspruch 7 bestehend aus
I) 22 bis 70 Gew-% mindestens eines Copolyamids nach einem der Ansprüche 1 bis 7;
II) 30 bis 70 Gew.-% mindestens eines Füllstoffes; und
III) 0 bis 8 Gew.-% mindestens eines Zusatzstoffes;
wobei die Komponente (III) verschieden von Komponente (II) ist und wobei sich die Mengenanteile der Komponenten (I) bis (III) auf 100 Gew.-% ergänzen.

9. Polyamid-Formmasse nach einem der Ansprüche 7 oder 8,
**dadurch gekennzeichnet, dass** ein aus der Polyamid-Formmasse hergestellten Formkörper mindestens eine der folgenden Eigenschaften aufweist:
• einen Zug-E-Modul bestimmt nach ISO 527 von mindestens 5000 MPa, bevorzugt mindestens 8000 MPa, besonders bevorzugt mindestens 12000 MPa aufweist; und/oder
• einen Glanzwert bei 60° im trockenen Zustand, bestimmt nach DIN EN 2813 (2015), von 70 bis 100 GU; und/oder
• einen Glanzwert bei 60° im konditionierten Zustand, bestimmt nach DIN EN 2813 (2015), von 60 bis 100 GU.

10. Formkörper herstellbar aus einem Copolyamid nach einem der vorhergehenden Ansprüche 1 bis 6 oder aus einer Polyamid-Formmasse nach einem der vorhergehenden Ansprüche 7 bis 9.

11. Formkörper nach Anspruch 10,
**dadurch gekennzeichnet, dass** der Formkörper ausgewählt ist aus der Gruppe bestehend aus unlackierten Sichtteilen mit oder ohne Funktion, im Fahrzeuginnenraum oder Kofferraum, Haushalt, Maschinenbau, an Elektrogeräten, Elektronikgeräten, Haushaltsgeräten, Möbeln.

12. Verwendung der Copolyamide nach einem der Ansprüche 1 bis 6 oder einer Polyamid-Formmasse nach einem der Ansprüche 7 bis 9 zur Herstellung von unlackierten Sichtteilen mit oder ohne Funktion, im Fahrzeuginnenraum oder Kofferraum, Haushalt, Maschinenbau, an Elektrogeräten, Elektronikgeräten, Haushaltsgeräten, Möbeln.

## Claims

1. A semi-crystalline copolyamide formed from the following monomers (a1) to (a5):
(a1) 23 to 37.5 mol% 1,6-hexanediamine;
(a2) 12.5 to 22 mol% 1,3-bis(aminomethyl)cyclohexane;
(a3) 0 to 5 mol% at least one diamine with 2 to 35 carbon atoms, differing from monomers (a1) and (a2);
(a4) 45 to 50 mol% 1,6-hexanedioic acid; and
(a5) 0 to 5 mol% at least one dicarboxylic acid with 2 to 44 carbon atoms, differing from monomer (a4);
where the proportions of the monomers (a1), (a2), and (a3) are with respect to the sum of the diamines used and add up to 50 mol%; and
where the proportions of the monomers (a4) and (a5) are with respect to the sum of the dicarboxylic acids used and add up to 50 mol%; and
where the monomers (a1) to (a5) add up to 100 mol%.

2. A copolyamide in accordance with claim 1, **characterized in that**
• the proportion of monomer (a1) in the copolyamide is in the range from 23 to 35 mol-%, preferably in the range from 25 to 32.5 mol%, particularly preferably in the range from 27.5 to 32.5 mol%; and/or
• the proportion of monomer (a2) in the copolyamide is in the range from 14 to 22 mol-%, preferably in the range from 16 to 20 mol%, particularly preferably in the range from 17.5 to 20 mol%; and/or
• the proportion of monomer (a3) in the copolyamide is in the range from 0 to 2.5 mol-%,
where the proportions of the monomers (a1), (a2), and (a3) are with respect to the sum of the diamines used and add up to 50 mol%.

3. A copolyamide in accordance with one of the preceding claims, **characterized in that**
• the proportion of monomer (a4) in the copolyamide is in the range from 47.5 to 50 mol%; and/ or
• the proportion of monomer (a5) in the copolyamide is in the range from 0 to 2.5 mol-%,
where the proportions of the monomers (a4) and (a5) are with respect to the sum of the dicarboxylic acids used and add up to 50 mol%.

4. A copolyamide in accordance with one of the preceding claims, **characterized in that**
the at least one monomer (a3) is preferably selected from the group consisting of ethylenediamine, butanediamine, pentanediamine, methylpentanediamine, 1,8-octanediamine, methyloctanediamine, 1,9, nonanediamine, 1,10-decanediamine, 1,11-undecanediamine, 1,12 dodecaneamine, trimethyl hexamethylenediamine, 1,4-cyclohexanediamine, 1,3-cyclohexanediamine, bis- 4-amino-3-methylcyclohexyl)methane, bis-(4-amino-cyclohexyl)methane, isophoronediamine, 1,4-bis(aminomethyl)cyclohexane, m-xylylenediamine, p-xylylenediamine bis(aminocyclohexyl)propane and its alkyl derivatives, norbornanediamine and bis(aminomethyl)norbornane; and/or
the at least one monomer (a5) is selected from the group consisting of isophthalic acid, terephthalic acid, naphthalene dicarboxylic acid, 1,9-nonanedioic acid, 1,10-decanedioic acid, 1,11-undecanedioic acid, 1, 12-dodecanedioic acid, 1,13-tridecanedioic acid, 1,14-tetradecanedioic acid, 1,15-pentadecanoic acid, 1,16-hexadecanedioic acid, 1,17-heptadecanedioic acid, 1,18-octadecanedioic acid, arachidic acid, Japan acid, behenic acid, cyclohexanedioic acid, phenylindanedicarboxylic acid, phenylenediooxydiacetic acid, and dimer fatty acid with 35 or 44 carbon atoms.

5. A copolyamide in accordance with one of the preceding claims, **characterized in that** the copolyamides have a relative viscosity, measured with 0.5 g in 100 ml m-cresol at 20°C, of 1.45 to 2.10, particularly preferably 1.50 to 2.05, very particularly preferably 1.55 to 1.98.

6. A copolyamide in accordance with one of the preceding claims, **characterized in that** the copolyamide has at least one of the following properties, determined in accordance with ISO 11357-3 (2013):
• a glass transition temperature in the range from 50 to 200°C, preferably in the range from 60 to 190°C, particularly preferably in the range from 65 to 90°C ; and/or
• a melting temperature in the range from 180 to 260 °C, preferably from 205 to 245 °C, particularly preferably in the range from 210 to 235 °C; and/or
• a crystallization temperature in the range from 130 to 200 °C, preferably in the range from 140 to 200 °C; and/or
• a crystallization rate in the range from 12 to 50J/g min, preferably in the range from 15 to 47J/g min, particularly preferably in the range from 23 to 45J/g min.

7. A polyamide moulding compound containing at least one copolyamide in accordance with one of the preceding claims.

8. A polyamide moulding material in accordance with claim 7 consisting of
I) 22 to 70 wt% of at least one copolyamide in accordance with one of the claims 1 to 7;
ii) 30 to 70% by weight of at least one filler; and
III) 0 to 8 wt% of at least one additive,
where component (III) differs from component (II), and where the proportion of components (I) to (III) add up to 100 wt%.

9. A polyamide moulding material in accordance with one of the claims 7 or 8, **characterized in that** a moulding manufactured from the polyamide moulding compound has at least one of the following properties:
• a modulus of elasticity determined in accordance with ISO 527 of at least 5000 MPa, preferably at least 8000 MPa, and particularly preferably at least 12000 MPa; and/or
• a gloss value of 70 to 100 GU determined in accordance with DIN EN 2813 (2015) in the dry state a t 60°; and/or
• a gloss value of 60 to 100 GU determined in accordance with DIN EN 2813 (2015) in the conditioned state at 60°.

10. A moulding manufacturable from a copolyamide in accordance with one of the preceding claims 1 to 6 or from a polyamide moulding material in accordance with one of the preceding claims 7 to 9.

11. A moulding in accordance with claim 10,
**characterized in that** the moulding is selected from the group consisting of non-lacquered visible parts with or without a function, in a car passenger compartment or trunk, in the household, mechanical engineering, on electrical devices, electronic devices, domestic appliances, furniture.

12. Use of the copolyamides in accordance with one of the claims 1 to 6 or of a polyamide moulding compound in accordance with one of the claims 7 to 9 for manufacturing non-lacquered visible parts with or without a function, in a car passenger compartment or trunk, in the household, mechanical engineering, on electrical devices, electronic devices, domestic appliances, furniture.

## Revendications

1. Copolyamide semi-cristallin formé des monomères (a1) à (a5) suiva nts :
(a1) 23 à 37,5 % en moles de 1,6-hexanediamine ;
(a2) 12,5 à 22 % en moles de 1,3-bis(aminométhyl)-cyclohexane ;
(a3) 0 à 5 % en moles d'au moins une diamine avec 2 à 35 atomes de carbone, différente des monomères (a1) et (a2) ;
(a4) 45 à 50 % en moles d'acide 1,6-hexanoïque ; et
(a5) 0 à 5 % en moles d'au moins un acide dicarboxylique avec 2 à 44 atomes de carbone, différent du monomère (a4) ;
dans lequel les pourcentages des monomères (a1), (a2) et (a3) sont rapportés à la somme des diamines utilisées et se complètent au total à 50 % en moles ; et
dans lequel les pourcentages des monomères (a4) et (a5) sont rapportés à la somme des acides dicarboxyliques utilisés et se complètent au total à 50 % en moles ; et
dans lequel les monomères (a1) à (a5) se complètent au total à 100 % en moles.

2. Copolyamide selon la revendication 1, **caractérisé en ce que**
• le pourcentage de monomère (a1) dans le copolyamide se situe dans la plage de 23 à 36 % en moles, de préférence dans la plage de 25 à 34 % en moles, de manière particulièrement préférée dans la plage de 27,5 à 32,5 % en moles ; et/ou
• le pourcentage de monomère (a2) dans le copolyamide se situe dans la plage de 14 à 22 % en moles, de préférence dans la plage de 16 à 20 % en moles, de manière particulièrement préférée dans la plage de 17,5 à 20 % en moles ; et/ou
• le pourcentage de monomère (a3) dans le copolyamide se situe dans la plage de 0 à 2,5 % en moles ;
dans lequel les pourcentages des monomères (a1), (a2) et (a3) sont rapportés à la somme des diamines utilisées et se complètent au total à 50% en moles.

3. Copolyamide selon l'une quelconque des revendications précédentes, **caractérisé en ce que**
• le pourcentage de monomère (a4) dans le copolyamide se situe dans la plage de 47,5 à 50 % en moles ; et/ou
• le pourcentage de monomère (a5) dans le copolyamide se situe dans la plage de 0 à 2,5 % en moles ;
dans lequel les pourcentages des monomères (a4) et (a5) sont rapportés à la somme des acides dicarboxyliques utilisés et se complètent au total à 50 % en moles.

4. Copolyamide selon l'une quelconque des revendications précédentes, **caractérisé en ce que**
le au moins un monomère (a3) est choisi dans le groupe constitué par l'éthylènediamine, la butanediamine, la pentanediamine, la méthylpentanediamine, la 1,8-octanediamine, la méthyloctanedia-mine, la 1,9-nonanediamine, la 1,10-décanediamine, la 1,11-undécane-diamine, la 1,12-dodécanediamine, la triméthylhexaméthylènedia-mine, la 1,4-cyclohexanediamine, la 1,3-cyclohexanediamine, le bis-(4-amino-3-méthyl- cyclohexyl)-méthane, le bis-(4-amino-cyclohexyl)-méthane, l'isophoronediamine, le 1,4-bis(aminométhyl)-cyclohexane, la m-xylylènediamine, la p-xylylènediamine, le bis(aminocyclohexyl)propane et ses dérivés alkylés, la norbornanediamine et le bis(aminométhyl)norbornane et/ou le au moins un monomère (a5) est choisi dans le groupe constitué par l'acide isophtalique, l'acide téréphtalique, l'acide naphtalènedicarboxylique, l'acide 1,9-nonanedioïque, l'acide 1,10-décanedioïque, l'acide 1,11-undécanedioïque, l'acide 1,12-dodé-canedioïque, l'acide 1,13-tridécanedioïque, l'acide 1,14-tétradécane-dioïque, l'acide 1,15-pentadécanedioïque, l'acide 1,16-hexadécane-dioïque, l'acide 1,17-heptadécanedioïque, l'acide 1,18-octadécane-dioïque, l'acide arachique, l'acide japanique, l'acide béhénique, l'acide cycloheaxanedioïque, l'acide phénylindanedicarboxylique, l'acide phé-nylènedioxydiacétique et l'acide gras dimère avec 36 ou 44 atomes de carbone.

5. Copolyamide selon l'une quelconque des revendications précédentes, **caractérisé en ce que** les copolyamides présentent une viscosité relative, mesurée avec 0,5 g dans 100 ml de m-crésol à 20 °C, de 1,45 à 2,10, de préférence de 1,50 à 2,05, de manière particulièrement préférée de 1,55 à 1,98.

6. Copolyamide selon l'une quelconque des revendications précédentes, **caractérisé en ce que** les copolyamides présentent au moins l'une des propriétés suivantes, déterminée selon ISO 11357-3 (2013) :
• une température de transition vitreuse dans la plage de 50 à 200 °C, de préférence de 60 à 190 °C, de manière particulièrement préférée dans la plage de 65 à 90 °C ; et/ou
• une température de fusion dans la plage de 180 à 260 °C, de préférence de 205 à 245 °C, de manière particulièrement préférée dans la plage de 210 à 235 °C ; et/ou
• une température de cristallisation dans la plage de 130 à 200 °C, de préférence dans la plage de 140 à 200 ; et/ou
• une vitesse de cristallisation dans la plage de 12 à 50 J/g min, de préférence dans la plage de 15 à 47 J/g min, de manière particulièrement préférée dans la plage de 23 à 45 J/g min.

7. Matière à mouler en polyamide contenant au moins un copolyamide selon l'une quelconque des revendications précédentes.

8. Matière à mouler en polyamide selon la revendication 7 constituée de
I. 22 à 70 % en poids d'au moins un copolyamide selon l'une quelconque des revendications 1 à 7 ;
II. 30 à 70 % en poids d'au moins une charge ; et
III. 0 à 8 % en poids d'au moins un additif ;
dans laquelle le composant (III) est différent du composant (II) et dans laquelle les pourcentages des composants (I) à (III) se complètent au total à 100 % en poids.

9. Matière à mouler en polyamide selon l'une quelconque des revendications 7 ou 8, **caractérisée en ce qu'**un corps moulé fabriqué à partir de la matière à mouler en polyamide présente au moins l'une des propriétés suivantes :
• un module d'élasticité en traction déterminé selon la norme ISO 527 d'au moins 5 000 MPa, de préférence d'au moins 8 000 MPa, de manière particulièrement préférée d'au moins 12 000 MPa ; et/ou
• une valeur de brillance à 60° à l'état sec, déterminée selon la norme DIN EN 2813 (2015), de 70 à 100 GU ; et/ou
• une valeur de brillance à 60° à l'état conditionné, déterminée selon la norme DIN EN 2813 (2015), de 60 à 100 GU.

10. Corps moulé pouvant être fabriqué à partir d'un copolyamide selon l'une quelconque des revendications précédentes 1 à 6 ou à partir d'une matière à mouler en polyamide selon l'une quelconque des revendications précédentes 7 à 9.

11. Corps moulé selon la revendication 10, **caractérisé en ce que** le corps moulé est choisi dans le groupe constitué par des pièces visibles non peintes, avec ou sans fonction, dans l'habitacle d'un véhicule ou le coffre, le ménage, la construction mécanique, sur des appareils électriques, des appareils électroniques, des appareils ménagers, des meubles.

12. Utilisation des copolyamides selon l'une quelconque des revendications 1 à 6 ou d'une matière à mouler en polyamide selon l'une quelconque des revendications 7 à 9 pour la fabrication de pièces visibles non peintes avec ou sans fonction, dans l'habitacle d'un véhicule ou le coffre, le ménage, la construction mécanique, sur des appareils électriques, des appareils électroniques, des appareils ménagers, des meubles.
